# EUROPEAN PATENT SPECIFICATION

(11) **EP 3 153 267 B1**
(45) Date of publication and mention of the grant of the patent: **12.12.2018**
(21) Application number: 16192256.2
(22) Date of filing: 04.10.2016
(51) Int. Cl.: B23D 47/08, B27B 5/22

(54) **CUTTING DEVICE FOR TIMBER, SO-CALLED TRIMMER AND A SET- AND ACTUATING DEVICE FOR A PIVOTABLE SAW ASSEMBLY**
SCHNEIDVORRICHTUNG FÜR HOLZ, SOGENANNTER TRIMMER SOWIE EINSTELL- UND BETÄTIGUNGSVORRICHTUNG FÜR EINE SCHWENKBARE SÄGEANORDNUNG
DISPOSITIF DE COUPE POUR LE BOIS, DITE ÉBOUTEUSE MULTILAME ET ENSEMBLE ET DISPOSITIF D'ACTIONNEMENT POUR UN ENSEMBLE SCIE PIVOTANT

(30) Priority: 07.10.2015 SE 1551286
(43) Date of publication of application: 12.04.2017
(73) Proprietor: Renholmen AB, 930 47 Byske (SE)
(72) Inventor: LUNDQVIST, Erik, 930 10 LÖVÅNGER (SE)
(74) Representative: Zacco Sweden AB

(56) References cited:
- DE-A1-102009 024 955
- DE-U1-202007 008 554
- DE-U1-202013 011 750

## Description

The present invention concerns a cutting device for timber, also known as a "trimmer", according to the introduction to claim 1. The invention concerns also a set and actuating device for a pivotable saw assembly that is a component of a trimmer according to the introduction to claim 9.

In a production line for sawn timber, the pieces of timber are stacked as planks normally in layers of standard lengths to form packages, which are then surrounded by plastic or similar packaging material. Cutting of the timber members to the desired length takes place in what are known as "adjustment cutters" or "trimmers", which are components of the production line. A particular problem with sawn timber material, such as timber members, is that they are never exactly identical, and can demonstrate many types of fault, such as, for example, bends or deviations from true, and different lengths, shapes or moisture contents. In certain cases, the timber members can be split while they are moving forwards along the production line or parts of the timber in the form of, for example, cut ends, scrap cuttings or similar along the production line can cause blockages that prevent the moving parts that are components of the said machine from carrying out their motions, which may result in forces arising that are so great that the machine is damaged and that the production line must, as a consequence of this, be stopped for repair.

At an adjustment cutter or trimmer for timber members, a large number of pivotable saw assemblies, 10-20 such assemblies, are arranged as a row of cutting units above a transporter provided with carriers on which the timber members are fed forwards perpendicular to their longitudinal direction. Each saw assembly has a vertically displaceable saw blade and they are arranged at such a separation in a row that a combination of desired timber lengths can be achieved through free cutting, i.e. through sawing the timber member at one of its ends.

At conventional saw assemblies in an adjustment cutter, the saw blades (circular saws) are mounted in bearings in a manner that allows rotation at a shaft that, in turn, is supported by a pivotable arm also mounted in bearings. When viewed in an initial position, the arm is essentially horizontal or directed somewhat upwards. By the influence of a set and actuating device that is a component of the saw assembly, the arm can be raised and lowered, whereby the saw blade is displaced in a corresponding manner. The pathway of motion is in this way adapted according to the thickness of the timber that is to be cut. The timber whose length is to be adjusted is transported in the transverse direction or transversely on a chain transporter or similar provided with carriers, with the timber members lying at equal mutual separations parallel to and at a distance from each other.

Timber members that arrive at a cutting position are inspected and cut as required. For the cutting, a cutting order is created, which in practice includes an electrical signal that is sent to the relevant set and actuating device for a saw blade in a saw assembly. These orders are automatically carried out with the aid of a control system when the relevant timber member reaches the cutting position.

In modern adjustment cutters with high capacity, which normally means the rate of carriers passing the cutter per minute, the timber members lie relatively close to each other and thus the vertical motion of the saw blade must take place rapidly and with high precision with respect to both location and time, in order to prevent the blades damaging the preceding or subsequent timber member, if either of these is to be cut to a different length. Thus, the set and actuating device is subject to strict demands with respect to its function, speed and precision. With the aid of the set and actuating device, the pivoted arm can be raised and lowered, and the saw blade can in this way in a corresponding manner be displaced vertically up into an upper inactive position and down into a cutting position. A fundamental requirement for the correct function of a saw assembly is, consequently, that the vertical motions of the saw blades are precise and well synchronised with the distribution of the carriers.

When the saw blade descends in order to cut the timber, it sometimes happens that the pivoted arm or some other part of the device that is under power is stopped by an unforeseen impediment, which can typically be constituted by a piece of cut-off timber that is standing in a vertical position, or similar. Such temporary disturbances of the operation are normally solved by the adjustment cutter being stopped and the piece of timber being removed, after which the adjustment cutter can be restarted. In certain cases, a piece of timber can lead to very large resulting forces arising, i.e. counteracting forces, in order for an equilibrium of forces to be reached. Such forces can mean that at least one of the saw assembly and the set and actuating device that ensures that the raising and lowering motion of the blade takes place being damaged. In order to minimise damage to the mechanical parts of the set and actuating device, some type of safety function that can be activated is arranged. One common safety function comprises a carrier in the form of, for example, what is known as a "breaker pin", dimensioned to be broken in the event of stoppage, such that a driving means that is a component of the set and actuating device, such as a drive shaft that is a component of an electric motor, continues to rotate without influencing the device that is under power. The breaker pin is normally arranged in a penetrating hole, for example through a sheath on a shaft, between the driving and the driven device. One disadvantage with the use of a breaker pin is that it entails in itself a certain degree of play, and in this way loseness, in the interface between the driving and the driven device. It should be understood that the said play has a detrimental effect of the positional precision and accuracy of the adjustment device. A further disadvantage is that not only the relevant saw assembly but also a complete trimmer unit, and in this way the production line, must be stopped during the exchange of a broken breaker pin.

In certain cases, where the breaker pin has not functioned in the intended manner, the interruptions in operations that arise may become expensive, while the sawing machine must in certain cases undergo extensive repairs and the exchange of damaged parts. The loss of activity of the facility during such interruptions in operation may become of long duration, while the stoppage affects not only the sawmill in question, but may mean also that a complete sawing line must be stopped for a considerable period.

From DE 20 2013 011 750 U1 is known a cutting saw with a pivoted arm at one end of which a saw blade is mounted in bearings in a manner that allows rotation. The cutting saw is equipped with a set and actuating device with which the saw blade can carry out a reciprocating cutting motion from a rear inactive position to a forward sawing position. The set and actuating device includes an electric motor and a crank arm mechanism, the crank arm of which comprises a circular disk arranged at the drive shaft of the motor. One end of the crank shaft is united in a joint at a connection point that is eccentrically located on the disk and whose second end is connected to the pivoted arm. The connection point executes continuous rotary motion when the saw blade carries out a cutting motion.

Due to the combination of electric motor and crank arm mechanism, which includes a lightweight link arm (crankshaft) to convert the rotary motion of the electric motor to a reciprocating motion, advantageous operating properties are obtained. Due to the low masses of not only the crank arm mechanism but also the arm that supports the saw blade, the forces of inertia that arise during acceleration and retardation when the saw blade moves between the upper and the lower positions can be reduced and in this way also the cycle time can be reduced, which means that the sawing machine offers a high capacity. The set and actuating device, however, demonstrates the problem that it is sensitive for disturbances in operations from stoppages in the cutting motion due to unforeseen impediments, for example of the type that is described above.

A first purpose of the present invention, therefore, is, based on the prior art, to achieve a cutting device, a trimmer, that does not suffer from the disadvantages described above, but instead demonstrates a combination of not only advantageous operating properties that include high capacity, precision of motion, and high degree of synchronicity, but also safety in the face of external forces and torques that arise. A second purpose of the invention is to achieve a set and actuating device for a pivotable saw assembly that is a component of a trimmer and that does not suffer from the disadvantages described above.

These two purposes of the invention are achieved through a cutting device that has been given the distinctive features and characteristics that are specified in claim 1, and a set and actuating device that has been given the distinctive features and characteristics that are specified in claim 9.

Further advantages of the invention are made clear by the non-independent claims.

The insight that forms the basis of the invention is to use a servomotor to drive the crank arm mechanism that pivots the saw blade during the cutting motion. Due to the motion-control circuit of the servomotor, the angular position of a drive shaft that drives a crank arm can be controlled and monitored such that the crank arm is arranged for driving within a limited sector of the crank under the cutting motion in which critical angular positions can be avoided. In this way, large reactive forces from torques that may be generated in the mechanism during sudden stoppages, in particular in the regions of the two end positions of the cutting motion, can be prevented. With the aid of a torque-control circuit that is a component of the servomotor, i.e. a motor protector, also known as an "overload protector", a safety circuit is offered that, in combination with monitoring of the angular position, means that the need for a breaker pin is reduced or completely removed.

By the fact that a connection point between the crank arm and the crankshaft moves in a reciprocating motion along an arc of a circle between upper and lower end positions p1, p2, in a motion that does not exceed an angular region between the upper and lower dead points OD, ND of the crank arm, reactive forces that arise during sudden stoppages can be controlled and monitored. The maximum gear ratio during the reciprocating motion of the saw blade is located at the low-gradient central part in which the reactive forces are limited.

The invention will be described below in more detail with guidance from an embodiment that is shown in the attached drawings, of which:
Figure 1 shows a perspective view of a part of a cutting device, a "trimmer", that comprises several saw assemblies according to the invention, arranged next to each other and individually controllable,
Figure 2 shows a side view of a set and actuating device according to the invention that is a component of the cutting device viewed along a line II-II in Figure 1 and in which a pivotable saw assembly is located in a holding area at an upper end position,
Figure 3 shows a side view of the set and actuating device according to the invention corresponding to that in Figure 2, but now located at a lower end position in a working area,
Figure 4 shows schematically in a force component diagram how the relationship between the resulting torque M at the centre of a crank arm and a force F from, for example, a sudden stoppage changes with angle Θ in crank arm that is a component of the set and actuating device,
Figure 5 shows in a side view an enlargement of a region that is enclosed by the line V-V in Figure 2,
Figure 6 shows schematically a diagram that illustrates the expected torque load when a connection point between the crank and crankshaft that has been defined in the set and actuating device pivots between pre-determined upper and lower end positions p1, p2 within a sector of the crank, and there is shown in the diagram also pre-determined upper and lower torque limits, "M-limit max" and "M-limit min".
Figure 7 shows schematically the angular position of the crank arm at a determined upper torque limit "M-limit max" and where the magnitude of a resulting counterbalance force Fr1 depends on the perpendicular distance between the line of action of the force and the centre of rotation at different angles Θ of the crank arm.

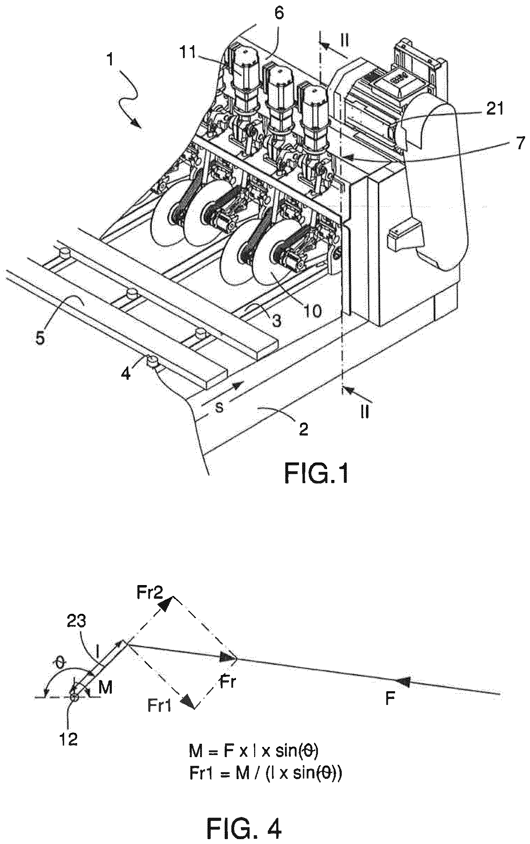

With reference to Figure 1, a part of a cutting device, a trimmer or adjustment cutter, is shown, generally denoted by reference number 1. The cutting device includes a framework 2 that supports a number of transport chains 3 that are arranged next to each other and that run parallel, which chains are equipped with carriers 4 for the transport of timber members 5 placed onto the transport chains. The timber members 5 are fed forwards perpendicular to their longitudinal direction on the transport chains 3.

On an upper part of the framework 1 of the cutting device, stretching transversely across the chain transporters 3, a frame 6 is arranged on which a number of set and actuating devices are arranged, next to each other and generally denoted by reference number 7. Only three of the said set and actuating devices are shown in Figure 1 for the sake of clarity: the number normally can amount to approximately 10-20.

The task of each set and actuating device 7 is to regulate the vertical position of a saw assembly that includes a saw blade 10. The set and actuating devices 7 can act independently of each other and each one is driven by an electrical drive unit that comprises an electric motor 11 with a drive shaft 12 that is in motion-transferring connection through a crank arm mechanism, generally denoted by the reference number 13, with a pivoted arm 14 that can be raised and lowered in the vertical plane. At one of its ends 15 the said pivoted arm 14 is connected at a joint with the frame 6, and at a second free end the said saw blade 10 is mounted in bearings in a manner that allows rotation supported parallel to the pivoted arm. Each saw blade 10 is driven through a transmission 17 that includes a shaft 18. The said shaft 18 is common for all of the saw blades 10 that can be raised and lowered that are arranged at the frame 6. The transmission 17 may be constituted by a gear, which in this case comprises a drive belt 19 with an associated pulley 20. The shaft 18 is driven by an electric motor 21.

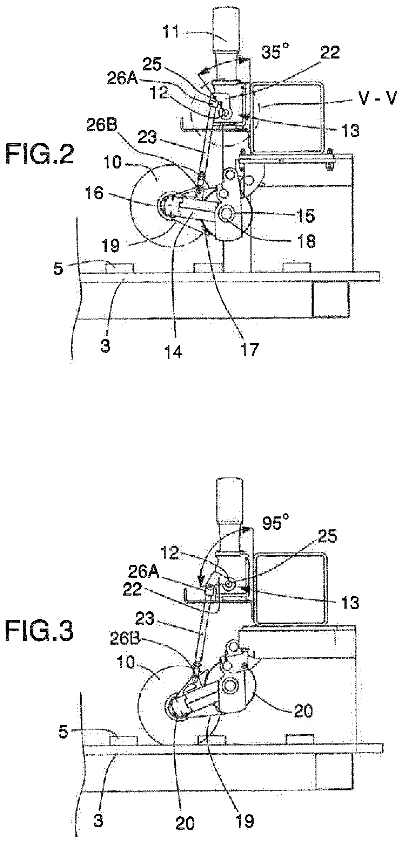

With reference to Figures 2 and 3, the crank arm mechanism 13 comprises a crank arm 22 and a crankshaft 23 with which the drive shaft 12 of the electric motor is in motion-transferring connection with the pivoted arm 14 that supports the saw blade 10. The crank arm 22 is arranged in a manner that does not allow it to rotate on the drive shaft 12 of the motor by, for example, a wedge or splined connector. The crankshaft 23 is connected at a first end 26A at a connection point 25 in a jointed manner with the said crank arm 22 and connected at a second end 26B in a jointed manner with the pivoted arm 14 such that the circular or rotary motion of the drive shaft 12 at the electric motor 11 is converted to an essentially linear reciprocating motion that influences the pivoted arm 14.

It is an advantage if the electric motor is selected from among the types of electric servomotor that offer motion control and that demonstrate integral electronic circuits with an integrated computer, the control system of which controls the angular position of the drive shaft 12 of the motor. The drive shaft 12 in a servo system is provided with a set point for the rotation of the shaft. The motor causes the shaft to move until its shaft position is in accordance with the set point that has been provided to the servo system. The term "drive shaft 12" is used below to denote not only rotation but also translation along a linear axis. Thus, it is used below to denote also a motor that operates in a linear manner, known as a "linear motor". The number of revolutions or the angular position at the drive shaft 12 of the servomotor is controlled and monitored by, for example, pulse measurement. It is an advantage if the selected servomotor is constituted by a prior art servomotor that has an integral driving circuit that includes an absolute encoder. In this type of motor, a central unit that is a component of the drive-control circuit is responsible for the revolution count. In certain designs, this type of motor has the advantage that positional data is stored in a memory when the current is switched off, the motor shaft is locked by means of an electromechanical brake. When the current is switched on, the stored data is read and the required positional data is restored. Since the motor in itself contains the electronic control circuits required, only two contacts at the motor are required, one for the power supply and one for control information.

A further significant advantage of this type of motor is that such motors comprise systems for speed control, whereby the speed, acceleration and retardation at the servomotors can be controlled in the desired manner. Thus the saw blade 10 can be positioned by rapid transport being arranged from a rear or upper holding area forwards in a motion area at a promoted position just above or close to the timber member that is to be cut, after which the motion undergoes a transition to a feed motion with a speed that is adapted to the peripheral speed of the saw blade during the actual cutting operation. The positions of both the waiting area and the cutting area can be easily varied, depending on the relative distance to, or on the dimension of, the timber that is arriving on the transport chains 3.

It is an advantage if the motor selected for the present invention has torque control, i.e. a motor protector, also known as an "overload protector", the task of which is to protect the motor against the excess current that can arise in the event of too high a load being placed on the motor during either start-up or operation. If the motor becomes overloaded for some reason, the current increases as does also the heat in the phase conductors of the motor. The heat causes a bimetal strip that is a component of the motor protector to bend, and the power supply is interrupted. If the current exceeds a pre-determined value, the protector is activated. As soon as the bimetallic strip cools, the power supply circuit is closed and the motor can again be operated.

In a cutting device for timber, a trimmer, a safety function based on torque control has the advantage that - in the event of a sudden stoppage due to, for example, a piece of timber present in the pathway of the saw blade during its resetting to the cutting area and its motion downwards - the overload protector will be activated, whereby the cutting motion will be interrupted, but only momentarily, after which the cutting motion will be resumed as soon as the overload protector has been reset, which takes place electronically i.e. automatically. In contrast with prior art cutting devices that comprise a safety function with breaker pins, the production line in the present case, in which torque control is used, does not normally need to be stopped: the saw blade will again attempt to carry out the cutting motion. In addition to the said motion control described above, torque control, servomotors normally comprise a safety circuit for the monitoring of the motion if, for example, a signal passes a pre-determined external alarm limit for a motion. A motor of make B&R and type ACOPOS has shown itself to function well for the purpose according to the present invention. Electric motors that comprise servo systems have long been known and will for this reason not be described in more detail.

Figure 4 shows schematically how a resultant torque Mr, which is proportional to a force vector F, acts at one end of the crankshaft 23. The force vector F represents the flow of force from an external force that acts on the crank mechanism and along a line of action in towards the centre of the drive shaft 12 of the electric motor 11, which force may arise during a sudden stoppage. The force vector Fr denotes the resultant force of the crank mechanism. The resulting torque Mr is proportional to the moment arm of the force F, i.e. to the perpendicular distance between the line of action of the force and the centre of rotation O in the drive shaft 12 of the electric motor 11. This perpendicular component of the resultant force in the crank mechanism is denoted in the drawing by Fr1.

The resultant torque can be calculated from the equation: Mr = F x I x sin (Θ).

The resultant force can be calculated from the equation: Fr1 = M / (I x sin (Θ))

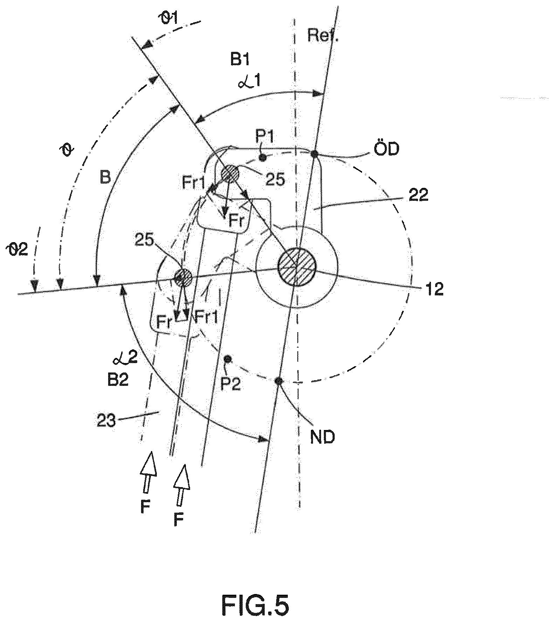

Figure 5 shows how the pivoting motion of the crank arm 22 is transferred to a linear reciprocating motion of the crankshaft 23. Through the influence of the crank arm 22, the saw assembly that is supported on the pivoted arm 14 can be pivoted from an upper inactive position to a lower cutting position, whereby the saw blade 10 is located in the pathway of an arriving timber member 5. The saw assembly, and in this way also the saw blade, are pivoted when a cutting order is received, i.e. when an electrical signal is given from a previous sorting operation upstream in a production line. A connection point 25 between the crank arm 22 and the crankshaft 23 in this case describes an upwards and downwards motion, forwards and backwards along an arc of a circle, between an upper and a lower end position p1, p2. The upper end position p1 of the connection point 25 is constituted by the upper dead point OD of the crank arm mechanism, i.e. by the upper turning point of the crank arm 22. The lower end position p2 of the connection point 25 is constituted by the lower dead point ND of the crank arm mechanism, i.e. by the lower turning point of the crank arm 22.

In order to avoid, in accordance with the invention, large reactive forces from torques that can arise in the mechanism in the event of sudden stoppages, the servomotor of the set and actuating device is so adapted that the angular position of the drive shaft 22 carries out a crank movement (B) over only a limited crank sector in which the connection point moves through an angle, a range of angles, that does not exceed the upper and lower dead points OD, ND of the crank arm. For the embodiment that is described here, it has been shown that it is suitable that the crank arm 22 is limited to pivot through angular positions in a range of angles between Θ=35° and Θ=95°. These two angular positions are shown in Figures 2, 3 and 5.

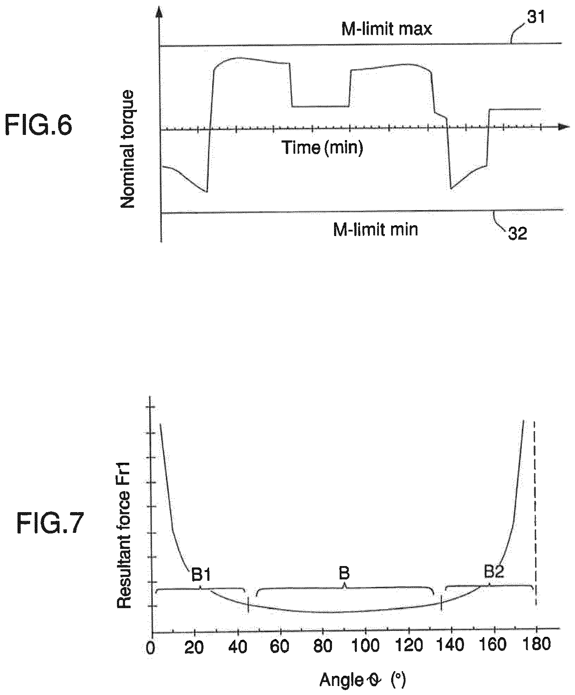

Figure 6 shows schematically a diagram that illustrates with a curve 30 the expected normal torque load when the set and actuating device pivots between pre-determined upper and lower end positions Θ1 and Θ2 within a sector of the crank, and there is shown in the diagram also pre-determined upper and lower torque limits, 31, 32 denoted "M-limit max" and "M-limit min".

As has been described above, servomotors are generally equipped with torque control, i.e. a motor protector that interrupts the power supply when a pre-determined level of overload is reached. It should be understood that the said torque limit is, however, solely of benefit at limited parts of the motion, since the relationship between torque and pressure force changes with the angle Θ of the crank arm 22. As the crank arm 22 approaches the upper OD and lower dead points ND, the resulting perpendicular force Fr1 will approach infinity, which should, of course, be avoided. The electronic force-limiting protector of the electric motor 11 will in this case not function in the intended manner.

In order to avoid this problem, the crank arm 2 is arranged, in accordance with the principles of the invention, to move in an alternative embodiment within a limited crank sector B with a relatively limited range between the said dead points OD, ND. The maximum gear ratio during the reciprocating motion of the saw blade 10 is thus arranged to be at the low-gradient intermediate central part, in which the perpendicular reactive forces Fr1 are limited and demonstrate only small variations. See also Figure 4 and Figure 7.

As a consequence of the crank arm 22 being limited to move only within a sector of the low-gradient part, the resultant perpendicular force Fr1 of the crank arm 22 will vary to such a small extent that the electronic force-limiting protector of the electric motor 11 makes accurate monitoring of the resulting counteracting force of the crank arm 22 possible.

Figure 7 shows in more detail how a resultant counteracting force Fr1 at the crank arm 22 varies depending on the perpendicular distance between the line of action of the resultant force Fr and the centre of rotation of the crank arm at different angles Θ1, Θ2 based on a line A-A, at a diameter that cuts through the said upper and lower end positions p1, p2, and through the said upper and lower dead points OD, ND.

It is appropriate that a low-gradient intermediate part, over which the crank arm 22, in accordance with the invention, is caused to move such that only limited perpendicular reactive forces Fr1 arise. This low-gradient part is denoted by B in Figure 7. Critical transitional areas on the two sides of the said low-gradient part B are denoted by B1 and B2. The crank action B within the said low-gradient part of the interval is denoted by Θ in Figure 5 and is calculated from Θ2-Θ1.

As is shown in Figure 5, the crank action B of the connection point 25 is terminated towards the upper dead point OD at a first angle α1 that is at least 20° and that is preferably larger than 40° from the upper end position p1 of the crank arm 22. In a corresponding manner, the crank action B of the connection point 25 can be terminated towards the lower dead point ND at a second angle α2 that is at least 20° and that is preferably larger than 40° from the lower end position p2. Since the working area and thus also the risk for sudden stoppage increases with motion downwards in the direction towards the cutting position. In other words, since the risk for sudden stoppage becomes larger as the saw blade 10 becomes located closer to the timber member 5, the crank characteristics can be arranged in such a manner that the second angle α2, with which the crank action B of the connection point 25 terminates towards the lower dead point ND (the lower end position p2), is larger than the first angle α1, with which the crank action of the connection point 25 terminates towards the upper dead point OD (the upper end position p1). This means, in other words, that α2 > α1.

The invention is not limited to what has been described above and shown in the drawings: it can be changed and modified in several different ways within the scope of the innovative concept defined by the attached patent claims.

## Claims

1. A cutting device for timber, a trimmer, that comprises several saw assemblies that are arranged next to each other and that can be selectively influenced, each one of which comprising a pivoted arm (14) at one end of which a saw blade (10) is mounted in bearings in a manner that allows rotation and whose second end is mounted in bearings in a manner that allows rotation for pivoting upwards and downwards in a vertical plane around a shaft (15), a set and actuating device (7) that includes a motor (11) whose drive shaft (12) is in motion-transferring connection through a crank arm mechanism (13) with the pivoted arm that supports the saw blade in order to pivot from a rear inactive position the saw assembly forwards to a cutting position towards the timber members (5) that are transported on a transporter (3) preferably provided with carriers in which a connection point (25) between a crank arm (22) and a crankshaft (23), which connection point is a component of the crank arm mechanism, describes upwards and downwards directed motion, a motor-driven shaft (18) and a transmission (17) that is a component of each saw assembly and that acts between the motor-driven shaft and the saw blade, in which when cutting orders from a previous sorting operation are received one of the saw assemblies is pivoted to a cutting position at which the saw blade is located in the pathway of the arriving timber member, wherein the motor of the set and actuating device motor is a servomotor (11) with whose motion-control circuit the angular position of the drive shaft (12) and in this way also the angular position of the connection point (25) can be controlled and monitored during the cutting motion and that the crank arm (22), through the influence of the servomotor is arranged to carry out a crank action (B) over a limited crank sector where the connection point (25) moves forwards and backwards along an arc of a circle between an upper and a lower end position (p1, p2) during the cutting motion,
wherein the crank action (B) for the connection point (25) takes place through an angle (Θ) that does not exceed an angular region between an upper dead point position (ÖD) for the crank arm (22) and a lower dead point position (ND) for the crank arm (22).

2. The cutting device according to claim 1, whereby the crank action (B) of the connection point (25) towards the upper end position (p1) is terminated at a first angle (α1) that is larger than 20° from the upper dead point position (ÖD).

3. The cutting device according to any one of claims 1-2, whereby the crank action (B) of the connection point (25) towards the lower end position (p2) is terminated at a second angle (α2) that is larger than 20° from the lower dead point position (ND).

4. The cutting device according to any one of claims 2-3, whereby the crank action (B) of the connection point (25) towards the upper end position (p1) is terminated at a first angle (α1) that is larger than 40° from the upper dead point position (ÖD).

5. The cutting device according to any one of claims 2-4, whereby the crank action (B) of the connection point (25) towards the lower end position (p2) is terminated at a second angle (α2) that is larger than 40° from the lower dead point position (ND).

6. The cutting device according to any one of claims 3-5, whereby the second angle (α2) with which the crank action (B) of the connection point (25) is terminated towards the lower dead point position (ND) is larger than the first angle (α1) with which the crank action of the connection point (25) is terminated towards the upper dead point position (OD).

7. The cutting device according to any one of claims 1-6, whereby the crank arm mechanism (13) comprises a crank arm (22) that is connected in a manner that does not allow it to rotate to the drive shaft (12) of the motor 11, a crankshaft (23) one end (26A) of which is connected to the crank arm and whose second end (26B) is connected to the pivoted arm (14).

8. A set and actuating device for a pivotable saw assembly, comprising a pivoted arm (14) at one end of which a saw blade (10) is mounted in bearings in a manner that allows rotation and whose second end is mounted in bearings in a manner that allows rotation for the pivoting upwards and downwards of the saw blade in a vertical plane, an electric motor (11) whose drive shaft (12) is in motion-transferring connection with a crank arm mechanism (13) in order to pivot the saw assembly from a rear inactive position forwards to a cutting position against a timber member (5) in which a connection point (25) between a crank arm (22) and a crankshaft (23), which connection point is a component of the crank arm mechanism, describes upwards and downwards motion, wherein the electric motor (11) is a servomotor whose motion-control circuit is used for the control and monitoring of the angular position of the drive shaft (12) and in this way also the connection point (25), during the cutting motion, whereby the crank arm (22) is arranged to carry out a crank action (B) through a limited crank sector where the connection point (25) moves forwards and backwards along an arc of a circle between an upper and a lower end position (p1, p2) during the cutting motion,
wherein the crank action (B) takes place through an angle (Θ) that does not exceed an angular region between an upper dead point position (ÖD) for the crank arm (22) and a lower dead point position (ND) for the crank arm (22).

9. The set and actuating device according to claim 8, whereby the servomotor comprises a torque-control circuit, i.e. a motor protector that is used as overload protector in combination with the motion of the connection point (25) during a crank action (B) through a limited crank sector.

10. The set and actuating device according to claims 8-9, whereby the electric motor (11) comprises a circuit for the control of speed and that positioning of the saw blade (10) takes place through the speed of the connection point (25) being varied through the crank action (B) with respect to the relative distance of the saw blade to the timber member (5) or with respect to the dimension of the timber member.

## Patentansprüche

1. Schneidvorrichtung für Holz, einem Trimmer, der mehrere Sägeanordnungen umfasst, die nebeneinander angeordnet sind und die selektiv beeinflusst werden können, wobei jede von ihnen einen Schwenkarm (14) umfasst, an dessen einem Ende ein Sägeblatt (10) in Lagern auf eine Weise montiert ist, die eine Drehung erlaubt, und dessen zweites Ende in Lagern auf eine Weise montiert ist, die eine Drehung zum Schwenken nach oben und nach unten in einer vertikalen Ebene um eine Welle (15) erlaubt, eine Einstell- und Betätigungsvorrichtung (7), die einen Motor (11) einschließt, dessen Antriebswelle (12) in einer bewegungsübertragenden Verbindung über einen Kurbelarmmechanismus (13) mit dem Schwenkarm steht, der das Sägeblatt stützt, um die Sägeanordnung von einer hinteren Ruhestellung nach vorn in eine Schneidposition zu den Holzelementen (5) zu schwenken, die auf einer Transportvorrichtung (3), die vorzugsweise mit Trägern versehen ist, transportiert werden, wobei ein Verbindungspunkt (25), der eine Komponente des Kurbelarmmechanismus ist, zwischen einem Kurbelarm (22) und einer Kurbelwelle (23) eine nach oben und unten gerichtete Bewegung beschreibt, eine motorbetriebene Welle (18) und ein Getriebe (17), das eine Komponente jeder Sägeanordnung ist und zwischen der motorbetriebenen Welle und dem Sägeblatt wirkt, wobei beim Empfangen von Schneidaufträgen von einem vorherigen Sortiervorgang eine der Sägeanordnungen in eine Schneidposition geschwenkt wird, an der sich das Sägeblatt in dem Pfad des ankommenden Holzelements befindet, wobei der Motor der Einstell- und Betätigungsvorrichtung ein Stellmotor (11) ist, mit dessen Bewegungssteuerschaltung die Winkelposition der Antriebswelle (12) und auf diese Weise auch die Winkelposition des Verbindungspunkts (25) während der Schneidbewegung gesteuert und überwacht werden kann, und dass der Kurbelarm (22), durch den Einfluss des Stellmotors angeordnet ist, um einen Kurbelvorgang (B) über einen begrenzten Kurbelsektor auszuführen, wobei sich der Verbindungspunkt (25) während der Schneidbewegung entlang eines Bogens eines Kreises zwischen einer oberen und einer unteren Endposition (p1, p2) vorwärts und rückwärts bewegt,
wobei der Kurbelvorgang (B) für den Verbindungspunkt (25) über einen Winkel (Θ) erfolgt, der einen Winkelbereich zwischen einer oberen Totpunktlage (ÖD) für den Kurbelarm (22) und einer unteren Totpunktlage (ND) für den Kurbelarm (22) nicht überschreitet.

2. Schneidvorrichtung nach Anspruch 1, wobei der Kurbelvorgang (B) des Verbindungspunkts (25) in Richtung der oberen Endposition (p1) an einem ersten Winkel (α1), der größer als 20° ausgehend von der oberen Totpunktlage (ÖD) ist, beendet wird.

3. Schneidvorrichtung nach einem der Ansprüche 1-2, wobei der Kurbelvorgang (B) des Verbindungspunkts (25) in Richtung der unteren Endposition (p2) an einem zweiten Winkel (α2), der größer als 20° ausgehend von der unteren Totpunktlage (ND) ist, beendet wird.

4. Schneidvorrichtung nach einem der Ansprüche 2-3, wobei der Kurbelvorgang (B) des Verbindungspunkts (25) in Richtung der oberen Endposition (p1) an einem ersten Winkel (α1), der größer als 40° ausgehend von der oberen Totpunktlage (ÖD) ist, beendet wird.

5. Schneidvorrichtung nach einem der Ansprüche 2-4, wobei der Kurbelvorgang (B) des Verbindungspunkts (25) in Richtung der unteren Endposition (p2) an einem zweiten Winkel (α2), der größer als 40° ausgehend von der unteren Totpunktlage (ND) ist, beendet wird.

6. Schneidvorrichtung nach einem der Ansprüche 3-5, wobei der zweite Winkel (α2), mit dem der Kurbelvorgang (B) des Verbindungspunkts (25) in Richtung der unteren Totpunktlage (ND) beendet wird, größer als der erste Winkel (α1) ist, mit dem der Kurbelvorgang des Verbindungspunkts (25) in Richtung der oberen Totpunktlage (ÖD) beendet wird.

7. Schneidvorrichtung nach einem der Ansprüche 1-6, wobei der Kurbelarmmechanismus (13) einen Kurbelarm (22) umfasst, der auf eine Art und Weise verbunden ist, die ihm nicht erlaubt, zur Antriebswelle (12) des Motors 11 hin eine Kurbelwelle (23) zu drehen, deren eines Ende (26A) mit dem Kurbelarm verbunden ist und deren zweites Ende (26B) mit dem Schwenkarm (14) verbunden ist.

8. Einstell- und Betätigungsvorrichtung für eine schwenkbare Sägeanordnung, umfassend einen Schwenkarm (14), an dessen einem Ende ein Sägeblatt (10) in Lagern auf eine Weise montiert ist, die eine Drehung erlaubt, und dessen zweites Ende in Lagern auf eine Weise montiert ist, die eine Drehung für das Schwenken nach oben und nach unten des Sägeblatts in einer vertikalen Ebene erlaubt, einen Elektromotor (11), dessen Antriebswelle (12) in einer bewegungsübertragenden Verbindung mit einem Kurbelarmmechanismus (13) steht, um die Sägeanordnung von einer hinteren Ruhestellung nach vorn in eine Schneidposition gegen ein Holzelement (5) zu schwenken, wobei ein Verbindungspunkt (25), der eine Komponente des Kurbelarmmechanismus ist, zwischen einem Kurbelarm (22) und einer Kurbelwelle (23) eine Aufwärts- und Abwärtsbewegung beschreibt, wobei der Elektromotor (11) ein Stellmotor ist, dessen Bewegungssteuerschaltung für die Steuerung und Überwachung der Winkelposition der Antriebswelle (12), und auf diese Weise auch des Verbindungspunkts (25), während der Schneidbewegung verwendet wird, wobei der Kurbelarm (22) so angeordnet ist, um einen Kurbelvorgang (B) über einen begrenzten Kurbelsektor hinweg auszuführen, wobei sich der Verbindungspunkt (25) während der Schneidbewegung nach vorn und nach hinten entlang eines Bogens eines Kreises zwischen einer oberen und einer unteren Endposition (p1, p2) bewegt,
wobei der Kurbelvorgang (B) über einen Winkel (Θ) erfolgt, der einen Winkelbereich zwischen einer oberen Totpunktlage (ÖD) für den Kurbelarm (22) und einer unteren Totpunktlage (ND) für den Kurbelarm (22) nicht überschreitet.

9. Einstell- und Betätigungsvorrichtung nach Anspruch 8, wobei der Stellmotor eine Drehmomentsteuerschaltung umfasst, d. h. einen Motorschutz, der als Überlastschutz in Kombination mit der Bewegung des Verbindungspunkts (25) während eines Kurbelvorgangs (B) über einen begrenzten Kurbelsektor verwendet wird.

10. Einstell- und Betätigungsvorrichtung nach Ansprüchen 8-9, wobei der Elektromotor (11) eine Schaltung zur Steuerung der Geschwindigkeit umfasst und die Positionierung des Sägeblattes (10) durch die Variation der Geschwindigkeit des Verbindungspunkts (25) über den Kurbelvorgang (B) in Bezug auf den relativen Abstand des Sägeblattes zum Holzelement (5) oder in Bezug auf das Maß des Holzelements erfolgt.

## Revendications

1. Dispositif de coupe pour le bois, une ébouteuse, comprenant plusieurs ensembles de scie disposés l'un à côté de l'autre et pouvant être sélectivement influencés, chacun d'eux comprenant un bras pivotant (14) à une extrémité duquel une lame de scie (10) est montée dans des paliers de manière à permettre une rotation et dont la deuxième extrémité est montée dans des paliers de manière permettant la rotation pour le pivotement vers le haut et vers le bas dans un plan vertical autour d'un arbre (15), un dispositif d'actionneur et de réglage (7) qui comprend un moteur (11) dont l'arbre d'entraînement (12) est en liaison de transfert de mouvement par un mécanisme à bras de manivelle (13) avec le bras pivotant qui supporte la lame de scie pour faire pivoter l'ensemble de scie depuis une position arrière inactive vers l'avant jusqu'à une position de coupe vers les pièces en bois (5) transportées sur un transporteur (3) de préférence muni de supports dans lesquels un point de connexion (25) entre un bras de manivelle (22) et un vilebrequin (23), ledit point de connexion étant un composant du mécanisme à bras de manivelle, décrit un mouvement dirigé vers le haut et vers le bas, un arbre entraîné par moteur (18) et une transmission (17) étant un composant de chaque ensemble de scie et agissant entre l'arbre entraîné par moteur et la lame de scie, dans lequel, lorsque des commandes de coupe provenant d'une opération de tri précédente sont reçues, l'un des ensembles de scie est pivoté dans une position de coupe à laquelle la lame de scie se trouve dans le passage de la pièce en bois arrivant, dans lequel le moteur du dispositif d'actionneur et de réglage est un servomoteur (11) dont le circuit de commande de mouvement est utilisé pour commander et surveiller la position angulaire de l'arbre d'entraînement (12) et ainsi également la position angulaire du point de connexion (25) lors du mouvement de coupe et que le bras de manivelle (22), par l'influence du servomoteur, est agencé pour effectuer une action de manivelle (B) à travers un secteur de manivelle limité où le point de connexion (25) se déplace vers l'avant et l'arrière le long d'un arc d'une cercle entre une position d'extrémité supérieure et inférieure (p1, p2) pendant le mouvement de coupe, dans lequel l'action de manivelle (B) pour le point de connexion (25) se fait selon un angle (Θ) qui ne dépasse pas une zone angulaire entre une position de point mort supérieure (ÖD) pour le bras de manivelle (22) et une position de point mort inférieure (ND) pour le bras de manivelle (22).

2. Dispositif de coupe selon la revendication 1, dans lequel l'action de manivelle (B) du point de connexion (25) vers la position d'extrémité supérieure (p1) se termine à un premier angle (α1) supérieur à 20° de la position de point mort supérieure (ÖD).

3. Dispositif de coupe selon l'une quelconque des revendications 1 à 2, dans lequel l'action de manivelle (B) du point de connexion (25) vers la position d'extrémité inférieure (p2) se termine à un deuxième angle (α2) supérieur à 20° de la position de point mort inférieure (ND).

4. Dispositif de coupe selon l'une quelconque des revendications 2 à 3, dans lequel l'action de manivelle (B) du point de connexion (25) vers la position d'extrémité supérieure (p1) se termine à un premier angle (α1) supérieur à 40° de la position de point mort supérieure (ÖD).

5. Dispositif de coupe selon l'une quelconque des revendications 2 à 4, dans lequel l'action de manivelle (B) du point de connexion (25) vers la position d'extrémité inférieure (p2) se termine à un deuxième angle (α2) supérieur à 40° de la position de point mort inférieure (ND).

6. Dispositif de coupe selon l'une quelconque des revendications 3 à 5, dans lequel le deuxième angle (α2) avec lequel l'action de manivelle (B) du point de connexion (25) se termine vers la position de point mort inférieur (ND) est supérieur au premier angle (α1) avec lequel l'action de manivelle du point de connexion (25) se termine vers la position de point mort supérieur (ÖD).

7. Dispositif de coupe selon l'une quelconque des revendications 1 à 6, dans lequel le mécanisme à bras de manivelle (13) comprend un bras de manivelle (22) qui est relié d'une manière qui ne lui permet pas de tourner sur l'arbre d'entraînement (12) du moteur (11), dont une extrémité (26A) du vilebrequin (23) est reliée au bras de manivelle et dont la deuxième extrémité (26B) est reliée au bras pivotant (14).

8. Dispositif d'actionneur et de réglage pour un ensemble de scie pivotant, comprenant un bras pivotant (14) à une extrémité duquel une lame de scie (10) est montée dans des paliers de manière à permettre une rotation et dont la deuxième extrémité est montée dans des paliers d'une manière permettant la rotation pour le pivotement vers le haut et vers le bas de la lame de scie dans un plan vertical, un moteur électrique (11) dont l'arbre d'entraînement (12) est en liaison de de transfert de mouvement avec un mécanisme à bras de manivelle (13) pour faire pivoter l'ensemble de scie depuis une position arrière inactive vers l'avant jusqu'à une position de coupe contre une pièce en bois (5) où un point de connexion (25) entre un bras de manivelle (22) et un vilebrequin (23), ledit point de connexion étant un composant du mécanisme à bras de manivelle, décrit un mouvement dirigé vers le haut et vers le bas, dans lequel le moteur électrique (11) est un servomoteur dont le circuit de commande de mouvement est utilisé pour commander et surveiller la position angulaire de l'arbre d'entraînement (12) et ainsi également le point de connexion (25) lors du mouvement de coupe, dans lequel le bras de manivelle (22) est agencé pour effectuer une action de manivelle (B) à travers un secteur de manivelle limité où le point de connexion (25) se déplace vers l'avant et l'arrière le long d'un arc d'un cercle entre une position d'extrémité supérieure et inférieure (p1, p2) pendant le mouvement de coupe, dans lequel l'action de manivelle (B) se fait selon un angle (Θ) qui ne dépasse pas une zone angulaire entre une position de point mort supérieure (ÖD) pour le bras de manivelle (22) et une position de point mort inférieure (ND) pour le bras de manivelle (22).

9. Dispositif d'actionneur et de réglage selon la revendication 8, dans lequel le servomoteur comprend un circuit de commande de couple, c'est-à-dire un protecteur de moteur, utilisé en tant que protecteur de surcharge en combinaison avec le mouvement du point de connexion (25) pendant l'action de manivelle (B) à travers un secteur de manivelle limité.

10. Dispositif d'actionneur et de réglage selon les revendications 8 à 9, dans lequel le moteur électrique (11) comprend un circuit de commande de la vitesse, et que le positionnement de la lame de scie (10) se fait à la vitesse du point de connexion (25) étant variée par l'action de manivelle (B) par rapport à la distance relative de la lame de scie à la pièce en bois (5) ou par rapport à la dimension de la pièce en bois.
